# EUROPÄISCHE PATENTANMELDUNG

(11) **EP 4 309 495 A1**
(43) Veröffentlichungstag der Anmeldung: **24.01.2024**
(21) Anmeldenummer: 23181598.6
(22) Anmeldetag: 27.06.2023
(51) Int. Cl.: A01K 1/01

(54) **KATZENSTREUSCHAUFEL MIT BEREITSCHAFTSHALTERUNG**

(30) Priorität: 22.07.2022 DE 202022104152 U
(71) Anmelder: Rotho Kunststoff AG, 5303 Würenlingen (CH)
(72) Erfinder: THOMA, Christian, 79774 Albbruck (DE); BRUNNER, Markus, 5613 Hilfikon (CH)
(74) Vertreter: LBP Lemcke, Brommer & Partner Patentanwälte mbB

(57) **Zusammenfassung**

Die Erfindung betrifft eine Katzenstreuschaufel 2 mit Bereitschaftshalterung 1, wobei die Katzenstreuschaufel 2 ein Schaufelblatt 4 mit einem daran angeformten Stiel 3 aufweist, und wobei die Bereitschaftshalterung 1 eine Basis 14 und einen Köcher 12 zur Aufnahme des Schaufelblatts 4 umfasst, dessen Öffnung sich auf einer von der Basis 14 verschiedenen Seite der Bereitschaftshalterung 1 befindet. Die Bereitschaftshalterung 1 umfasst ferner außerdem einen in ihrer Basis 6 integrierten Beutelspender.

## Beschreibung

Die Erfindung betrifft eine Katzenstreuschaufel mit Bereitschaftshalterung nach dem Oberbegriff des Anspruchs 1. Demnach umfasst eine Katzenstreuschaufel der vorliegenden Art ein Schaufelblatt, vorzugsweise mit siebartigen Öffnungen, und einen an das Schaufelblatt angeformten Stiel. Die Bereitschaftshalterung umfasst eine Basis, die auf dem Boden aufgestellt oder beispielsweise an einer Katzentoilette angebracht werden kann, sowie einen Köcher zur Aufnahme des Schaufelblatts der Katzenstreuschaufel, wobei sich die Öffnung dieses Köchers auf einer von der Basis verschiedenen Seite der Bereitschaftshalterung befindet. Die Katzenstreuschaufel wird zweckmäßigerweise so in die Bereitschaftshalterung eingesteckt, dass der Köcher das Schaufelblatt aufnimmt und der Stiel über die Öffnung des Köchers hinaussteht, so dass die Katzenstreuschaufel sehr leicht aus der Bereitschaftshalterung entnommen und wieder in diese eingesteckt werden kann.

Katzenstreuschaufeln, insbesondere solche mit siebartigen Öffnungen in ihrem Schaufelblatt, werden dazu verwendet, Katzenstreu aus einer Katzentoilette von Exkrementen zu reinigen.

Wenn eine Katzenstreuschaufel mit siebartigen Öffnungen im Schaufelblatt verwendet wird, können Verklumpungen aus dem Katzenstreu herausgesiebt werden, die durch Binden von flüssigen oder teilweise flüssigen Exkrementen entstehen. Derjenige Teil des Katzenstreus, der nicht verklumpt bzw. nicht verunreinigt ist, fällt durch die siebartigen Öffnungen der Katzenstreuschaufel durch und kann weiter verwendet werden.

Die herausgesiebten Verklumpungen des Katzenstreus und/oder Exkremente verbleiben auf dem Schaufelblatt der Katzenstreuschaufel und können von dieser in einen Beutel, in der Regel einen Kunststoffbeutel, gegeben und entsorgt werden. Es liegt in der Natur der Sache, dass das Schaufelblatt der Katzenstreuschaufel hierbei verunreinigt wird.

Um diese Verunreinigungen nicht sofort entfernen zu müssen, jedoch gleichzeitig kein Risiko einzugehen, dass die Verunreinigungen auf andere Gegenstände übertragen werden oder Geruchsbelästigungen auftreten, ist es bekannt, die Katzenstreuschaufel in eine Bereitschaftshalterung der vorliegenden Art einzustecken.

Eine entsprechende Bereitschaftshalterung ist aus der US 2004/0016860 A1 bekannt. Dort wird eine Bereitschaftshalterung mit einer Basis zum Aufstellen auf den Boden sowie einen von dieser Basis ausgehenden, sich nach oben öffnenden Köcher offenbart, in den eine Katzenstreuschaufel mit siebartigen Öffnungen im Schaufelblatt eingestellt werden kann. Der Köcher besteht dort aus einer feststehenden und einer schwenkbar an der Basis angebrachten Hälfte, so dass der Köcher durch Aufschwenken der schwenkbaren Hälfte geöffnet und durch Zuschwenken wieder geschlossen werden kann. Dies ermöglicht, den Köcherhohlraum sehr eng um das Schaufelblatt der Katzenstreuschaufel zu schließen, um etwaige Geruchsbelästigungen zu vermeiden.

Ausgehend von diesem Stand der Technik liegt der vorliegenden Erfindung die Aufgabe zugrunde, eine Katzenstreuschaufel mit Bereitschaftshalterung hinsichtlich der Gebrauchseigenschaften der Bereitschaftshalterung zu verbessern.

Gelöst ist diese Aufgabe durch eine Katzenstreuschaufel mit Bereitschaftshalterung mit den Merkmalen des Anspruchs 1. Vorteilhafte Weiterbildungen und Ausgestaltungen der erfindungsgemäßen Katzenstreuschaufel und Bereitschaftshalterung finden sich in den Ansprüchen 2 bis 15.

Eine Katzenstreuschaufel mit Bereitschaftshalterung nach der vorliegenden Erfindung, bei der die Katzenstreuschaufel ein Schaufelblatt mit einem daran angeformten Stiel aufweist und wobei die Bereitschaftshalterung eine Basis und einen Köcher zur Aufnahme des Schaufelblatts umfasst, zeichnet sich demnach dadurch aus, dass die Bereitschaftshalterung außerdem einen in ihrer Basis integrierten Beutelspender für Beutel zum Entsorgen der aus dem Katzenstreu herausgesiebten Verklumpungen und Exkremente aufweist.

Die Erfindung stellt damit eine sehr kompakte Lösung für das Problem dar, sowohl die Katzenstreuschaufel als auch die Beutel zum Entsorgen von Verunreinigungen, die man beide bei der Reinigung einer Katzentoilette benötigt, an demjenigen Ort zur Verfügung zu stellen, an dem man sie braucht. Es ist mehr oder weniger nur ein Arbeitsschritt, mit einer Hand die Katzenstreuschaufel aus der Bereitschaftshalterung zu ziehen, und mit der anderen Hand einen Beutel aus der Bereitschaftshalterung zu entnehmen, den man bei der Benutzung der Katzenstreuschaufel benötigt. Die zur Reinigung einer Katzentoilette benötigten Utensilien werden also in einer kompakten und "aufgeräumten" Form bereitgestellt.

Vorzugsweise ist der Köcher der erfindungsgemäßen Bereitschaftshalterung nicht nur zur Aufnahme, sondern auch zur Führung des Schaufelblatts beim Einstecken der Katzenstreuschaufel ausgebildet, so dass sich insgesamt eine stabile Aufbewahrung der Katzenstreuschaufel in der Bereitschaftshalterung ergibt.

Besonders bevorzugt ist am Übergang zwischen dem Schaufelblatt und dem Stiel der Katzenstreuschaufel ein Schildelement angeformt, welches das Schaufelblatt vom Stiel trennt. Dieses Schildelement verhindert ein Abrutschen vom Stiel und trennt das Schaufelblatt sauber vom Stiel, sodass keine Gefahr besteht, beim Benutzen der Katzenstreuschaufel mit dem Schaufelblatt in Berührung zu kommen.

Das Schildelement hat bevorzugt noch eine weitere Funktion: Es kann so zwischen dem Schaufelblatt und dem Stiel angebracht sein, dass es die Öffnung des Köchers abdeckt und/oder verschließt, wenn die Katzenstreuschaufel vollständig in den Köcher eingesteckt ist. Insbesondere kann das Schildelement solcherart dimensioniert sein, dass es die Öffnung des Köchers bündig abschließt, wenn die Katzenstreuschaufel in den Köcher eingesteckt ist.

Das Schildelement kann also gewährleisten, dass der Köcher verschlossen ist, wenn die Katzenstreuschaufel eingesteckt ist, so dass etwaige am Schaufelblatt anhaftenden Verunreinigungen keine Geruchsbelästigung verursachen können. Dies ist im Stand der Technik nach der US 2004/0016860 A1 zwar auch gewährleistet, jedoch um den Preis einer umständlichen Handhabung der Bereitschaftshalterung, deren eine Köcherhälfte auf- und zugeklappt werden muss.

Die Basis der erfindungsgemäßen Bereitschaftshalterung kann einen Hohlraum aufweisen, der durch ein entfernbares Basisteil verschlossen ist. Dieses entfernbare Basisteil kann lösbar an der Bereitschaftshalterung befestigt, insbesondere in den Hohlraum der Basis eingeclipst sein, beispielsweise indem es Rastarme und/oder Rastnasen aufweist, welche zum lösbaren Befestigen des entfernbaren Basisteils an Innenwänden des Hohlraums der Basis dienen, insbesondere über ein Einrasten in Rastvertiefungen oder Rastausnehmungen in diesem Hohlraum. Zweckmäßigerweise bildet das entfernbare Basisteil gleichzeitig einen Fuß der Bereitschaftshalterung.

Der erfindungsgemäße Beutelspender, der in die Bereitschaftshalterung integriert ist, weist bevorzugt eine Halterung für eine Beutelrolle auf, insbesondere in Form von Haltebügeln oder einer Haltelasche in Form einer Kreiszylinder-Mantelfläche. Gleichzeitig kann er auch eine Entnahmeöffnung aufweisen, was ermöglicht, die Halterung für den Beutelspender in die Basis der Bereitschaftshalterung zu integrieren. Diese Entnahmeöffnung des Beutelspenders bildet bevorzugt eine Beutelführungskante und/oder Abrisskante aus, so dass der Beutelspender einhändig bedient werden kann, indem ein bereitgestellter Beutel aus der Entnahmeöffnung herausgezogen und an der Abrisskante von der Beutelrolle abgerissen wird.

Die bevorzugte Ausführung der erfindungsgemäßen Bereitschaftshalterung, in der die Basis der Bereitschaftshalterung einen Hohlraum aufweist, der durch ein entfernbares Basisteil verschlossen ist, bietet dann besondere Vorteile, wenn das entfernbare Basisteil die Halterung für die Beutelrolle trägt, insbesondere indem bevorzugt vorhandene Haltebügel oder eine Haltelasche für die Beutelrolle am entfernbaren Basisteil angeordnet sind.

Diese bevorzugte Ausführungsform ermöglicht, Beutelrollen für den Beutelspender sehr einfach auszutauschen bzw. nachzufüllen, indem das entfernbare Basisteil von der Bereitschaftshalterung entfernt, eine neue Beutelrolle in die Halterung für die Beutelrolle eingesetzt und das entfernbare Basisteil wieder an der Basis der Bereitschaftshalterung angebracht wird, bevorzugt durch Einclipsen. Während dieses Vorgangs bleibt die Bereitschaftshalterung und insbesondere deren Köcher mit eingesteckter Katzenstreuschaufel völlig unbeeinflusst vom Beutelrollenwechsel, so dass keinerlei Gefahr besteht, dass die Katzenstreuschaufel aus ihrem Köcher herausgleitet.

Die Entnahmeöffnung des Beutelspenders ist besonders bevorzugt an einer Grenzfläche zwischen den entfernbaren Basisteil und dem verbleibenden Teil der Basis der Bereitschaftshalterung angeordnet, wobei der verbleibende Teil der Basis gleichzeitig die Beutelführungskante bzw. die Abrisskante des Beutelspenders bildet.

Es hat sich schließlich als vorteilhaft herausgestellt, wenn sich der Köcher der erfindungsgemäßen Bereitschaftshalterung nach oben öffnet. Die Katzenstreuschaufel lässt sich so intuitiv herausnehmen, und gleichzeitig ist sie sicher im Köcher der Bereitschaftshalterung verwahrt.

Im Rahmen der Erfindung liegt, dass alle Bestandteile der Erfindung aus spritzgegossenem Kunststoff bestehen oder aus Materialien wie beispielsweise Silikon, Gummi, Aluminium, Stahl oder Edelstahl gefertigt werden.

Die Einzelteile der Katzenstreuschaufel wie das Schaufelblatt, der Griff oder das Schildelement bzw. die Bereitschaftshalterung müssen nicht einstückig ausgeführt sein oder stoffschlüssig miteinander verbunden sein, sondern können auch durch Kraftschluss oder auch Formschluss die Katzenstreuschaufel bzw. die Bereitschaftshalterung bilden.

Weitere Ausführungsformen werden im Folgenden über Ausführungsbeispiele von erfindungsgemäß ausgestalteten Katzenstreuschaufeln mit Bereitschaftshalterungen gezeigt. Diese Ausführungsbeispiele sind in den folgenden Figuren beschrieben und erläutert. Es zeigen (alle Figuren sind schematische Darstellungen):
- Figur 1: eine perspektivische Ansicht eines Ausführungsbeispiels für eine erfindungsgemäß ausgestaltete Katzenstreuschaufel mit Bereitschaftshalterung;
- Figur 2: eine Explosionsdarstellung des Ausführungsbeispiels aus Figur 1;
- Figur 3: eine geschnittene Frontansicht des Ausführungsbeispiels;
- Figur 4: eine geschnittene Seitenansicht des Ausführungsbeispiels;
- Figur 5: eine perspektivische Darstellung der Katzenstreuschaufel aus dem Ausführungsbeispiel.

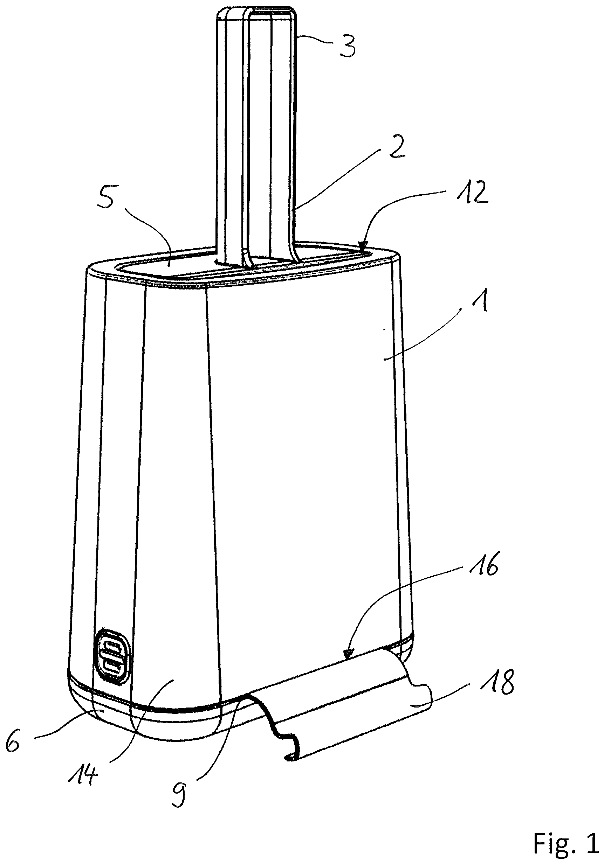

In Figur 1 ist eine Bereitschaftshalterung 1 mit einer Katzenstreuschaufel 2 dargestellt, wobei letztere nur teilweise sichtbar ist, da sie in die Bereitschaftshalterung 1 eingesteckt ist. Von der Katzenstreuschaufel 2 sind lediglich ein Stiel 3 sowie ein daran angeformtes Schildelement 5 sichtbar, das einen Köcher 12 der Bereitschaftshalterung 1 bzw. dessen nach oben orientierte Öffnung bündig abdeckt.

Das hier dargestellte Ausführungsbeispiel umfasst in einer Basis 14 der Bereitschaftshalterung 1 einen integrierten Beutelspender, der eine (hier nicht sichtbare) Beutelrolle enthält, von der ein Beutel 18 zum Entsorgen von Katzenstreu-Verunreinigungen aus einer schlitzartigen Entnahmeöffnung 9 des Beutelspenders hervorsteht und entsprechend herausgezogen werden kann. Der Beutel 18 kann, wenn er vollständig herausgezogen ist, an einer Abrisskante 16 der Entnahmeöffnung 9 vom Rest der Beutelrolle getrennt werden. Die Entnahmeöffnung 9 ist hierbei zwischen der Basis 14 der Bereitschaftshalterung 1 und einem entfernbaren Basisteil 6 gebildet, das einen Fuß der Bereitschaftshalterung 1 bildet und, worauf anhand der nachfolgenden Zeichnungen eingegangen wird, einen Großteil des Beutelspenders enthält.

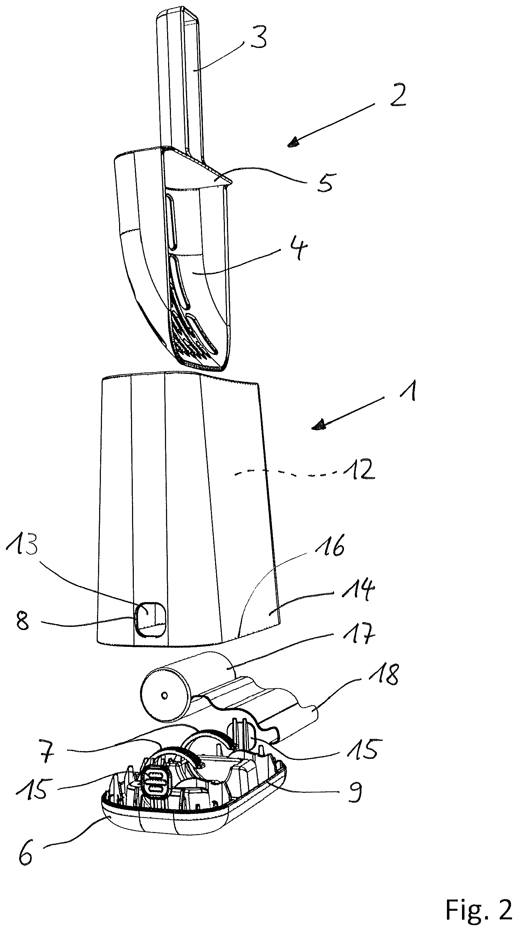

Die Details des in Figur 1 dargestellten Ausführungsbeispiels werden anhand Figur 2, einer schematischen Explosionsdarstellung, verdeutlicht:
Wie in Figur 2 zu erkennen ist, besteht die Katzenstreuschaufel 2 aus einem Stiel 3, einem Schaufelblatt 4 und einem Schildelement 5, das den Stiel 3 vom Schaufelblatt 4 trennt. Die Katzenstreuschaufel 2 ist einstückig aus spritzgegossenem Kunststoff gefertigt und daher stabil und leicht ausgebildet. Sie wird in der Bereitschaftshalterung 1 zur Benutzung bereitgehalten und kann vom Benutzer nach oben aus der Bereitschaftshalterung 1 herausgezogen werden, wie dies in Figur 2 dargestellt ist.

Da die Bereitschaftshalterung 1 die Katzenstreuschaufel 2 im vollständig eingesteckten Zustand (Figur 1) solcherart aufnimmt, dass das Schaufelblatt 4 vollständig von der Bereitschaftshalterung 1 umgeben ist, besteht keine Gefahr, dass etwa auf dem Schaufelblatt 4 verbleibende Verunreinigungen nach dem Reinigen einer Katzentoilette an andere Gegenstände gelangen oder Gerüche in die Umgebung verbreiten können. Für letzteres sorgt eine enge Führung der Katzenstreuschaufel 2 im Köcher 12 der Bereitschaftshalterung 1 zusammen mit einer Dimensionierung des Schildelements 5 der Katzenstreuschaufel 2, das die Öffnung des Köchers 12 bei eingesteckter Katzenstreuschaufel 2 verschließt (vgl. Figur 1).

In Figur 2 ist außerdem das entfernbare Basisteil 6 vom Rest bzw. vom verbleibenden Teil der Basis 14 der Bereitschaftshalterung 1 getrennt, und die im entfernbaren Basisteil 6 gehaltene Beutelrolle 17 aus einzelnen Beuteln 15 ist zu sehen. Die Beutelrolle 17 wird mit zwei Haltebügeln 7 im entfernbaren Basisteil 6 gehalten, wobei auch das entfernbare Basisteil 6 ein Spritzgussteil aus Kunststoff ist und die Haltebügel 7 elastisch verformbar am entfernbaren Basisteil 6 angeformt sind.

Das entfernbare Basisteil 6 weist stirnseitig jeweils einen elastisch verformbaren, einstückig angeformten Rastarm 15 auf, der in eine jeweils passende Rastausnehmung 8 in der Basis 14 einrastet. Die Rastausnehmungen 8 öffnen einen Hohlraum 13 innerhalb der Basis 14 der Bereitschaftshalterung 1 nach außen, so dass die Rastarme 15 von außen aus ihren Rastausnehmungen 8 herausgedrückt werden können, um das lösbare Basisteil 6 vom Rest der Bereitschaftshalterung 1 zu lösen (vgl. auch Figur 1).

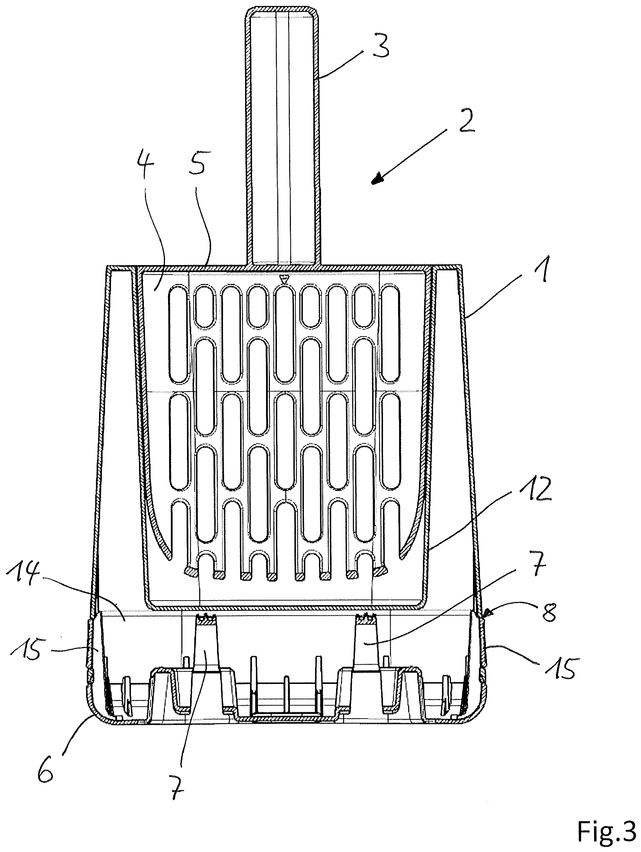

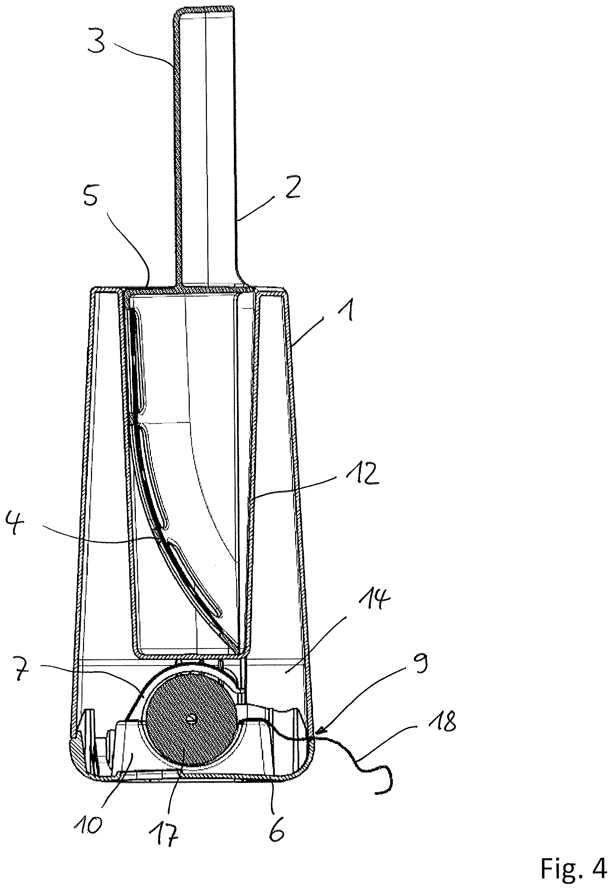

Die Figuren 3 und 4 sind Schnittdarstellungen des in den Figuren 1 und 2 dargestellten Ausführungsbeispiels, in einer Frontansicht (Figur 3) und einer seitlichen Ansicht (Figur 4). Diese Schnittdarstellungen verdeutlichen insbesondere, wie die Katzenstreuschaufel 2 bzw. deren Schaufelblatt 4 im Köcher 12 der Bereitschaftshalterung 1 geführt ist, so dass die Katzenstreuschaufel 2 im eingesteckten Zustand stabil und fest in der Bereitschaftshalterung 1 gehalten ist, wobei das Schildelement 5 der Katzenstreuschaufel 2 die nach oben orientierte Öffnung des Köchers 12 in der Bereitschaftshalterung 1 verschließt.

Unterhalb des Köchers 12 weist die Bereitschaftshalterung 1 ihre Basis 14 auf, an der mittels der Rastarme 15 und Rastausnehmungen 8 das lösbare Basisteil 6 befestigt ist.

Die in Figur 3 nicht sichtbare, jedoch in Figur 4 dargestellte Beutelrolle 17 wird in Führungsrippen 10 geführt und mittels daran angeformten, elastisch verformbaren Haltebügeln 7 gehalten, so dass einzelne Beutel 18 durch die Entnahmeöffnung 9 nach außen geführt, dort ergriffen und abgerissen werden können. Die entsprechenden Bauteile bilden somit den erfindungsgemäß vorhandenen Beutelspender des vorliegenden Ausführungsbeispiels in der Bereitschaftshalterung 1.

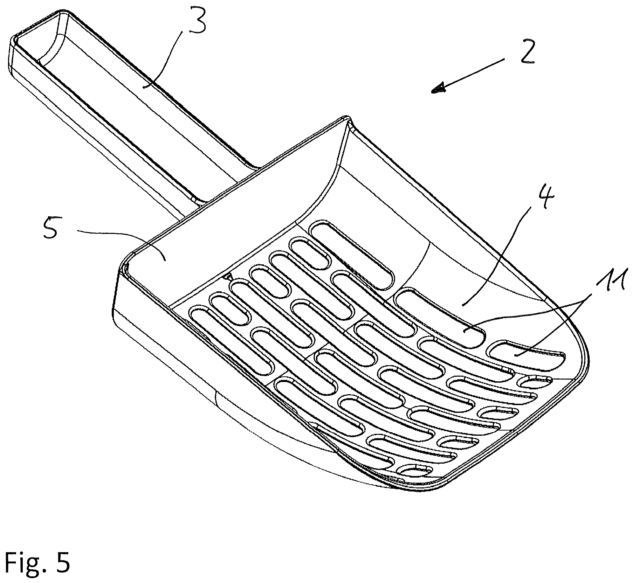

Figur 5 zeigt nochmals in einer perspektivischen Darstellung die Katzenstreuschaufel 2 mit ihren Bestandteilen: einem Stiel 3, einem Schaufelblatt 4 und einem Schildelement 5, das den Stiel 3 vom Schaufelblatt 4 trennt. Im Schaufelblatt 4 befinden sich langlochförmige Öffnungen 11, mit denen Katzenstreu gesiebt werden kann, wobei wiederverwertbare Teile des Katzenstreus durch die Öffnungen 11 hindurchfallen und Agglomerationen von Katzenstreu sowie sonstige Verunreinigungen auf dem Schaufelblatt 4 zurückgehalten werden.

Um die Katzenstreuschaufel 2 komfortabel in einen Beutel 18 entleeren zu können, ist das Schildelement 5 im vorliegenden Ausführungsbeispiel an drei Seiten um das Schaufelblatt 4 herumgeführt; so kann beim Benutzen der Katzenstreuschaufel 2 nichts unbeabsichtigt vom Schaufelblatt 4 herunterfallen.

### Bezugszeichenliste:

- 1: Bereitschaftshalterung
- 2: Katzenstreuschaufel
- 3: Stiel
- 4: Schaufelblatt
- 5: Schildelement
- 6: Entfernbares Basisteil
- 7: Haltebügel
- 8: Rastausnehmungen
- 9: Entnahmeöffnung
- 10: Führungsrippe
- 11: Öffnungen
- 12: Köcher
- 13: Hohlraum
- 14: Basis
- 15: Rastarme
- 16: Abrisskante
- 17: Beutelrolle
- 18: Beutel

## Patentansprüche

1. Katzenstreuschaufel (2) mit Bereitschaftshalterung (1), wobei die Katzenstreuschaufel (2) ein Schaufelblatt (4) mit einem daran angeformten Stiel (3) aufweist, und wobei die Bereitschaftshalterung (1) eine Basis (14) und einen Köcher (12) zur Aufnahme des Schaufelblatts (4) umfasst, dessen Öffnung sich auf einer von der Basis (14) verschiedenen Seite der Bereitschaftshalterung (1) befindet,
**dadurch gekennzeichnet,**
**dass** die Bereitschaftshalterung (1) außerdem einen in ihrer Basis (6) integrierten Beutelspender umfasst.

2. Katzenstreuschaufel (2) mit Bereitschaftshalterung (1) nach Anspruch 1,
**dadurch gekennzeichnet,**
**dass** der Köcher (12) zur Aufnahme und Führung des Schaufelblatts (4) beim Einstecken der Katzenstreuschaufel (2) ausgebildet ist.

3. Katzenstreuschaufel (2) mit Bereitschaftshalterung (1) nach einem der vorangegangenen Ansprüche,
**dadurch gekennzeichnet,**
**dass** am Übergang zwischen dem Schaufelblatt (4) und dem Stiel (3) der Katzenstreuschaufel (2) ein Schildelement (5) angeformt ist, das das Schaufelblatt (4) vom Stiel (3) trennt.

4. Katzenstreuschaufel (2) mit Bereitschaftshalterung (1) nach Anspruch 3,
**dadurch gekennzeichnet,**
**dass** das Schildelement (5) die Öffnung des Köchers (12) abdeckt und/oder verschließt, wenn die Katzenstreuschaufel (2) in den Köcher (12) eingesteckt ist.

5. Katzenstreuschaufel (2) mit Bereitschaftshalterung (1) nach Anspruch 4,
**dadurch gekennzeichnet,**
**dass** das Schildelement (5) die Öffnung des Köchers (12) bündig abschließt, wenn die Katzenstreuschaufel (2) in den Köcher (12) eingesteckt ist, wobei das Schildelement (5) vorzugsweise eben ausgeformt ist.

6. Katzenstreuschaufel (2) mit Bereitschaftshalterung (1) nach mindestens einem der vorangegangenen Ansprüche,
**dadurch gekennzeichnet,**
**dass** die Basis (14) der Bereitschaftshalterung (1) einen Hohlraum (13) aufweist, der durch ein entfernbares Basisteil (6) verschlossen ist.

7. Katzenstreuschaufel (2) mit Bereitschaftshalterung (1) nach Anspruch 5,
**dadurch gekennzeichnet,**
**dass** das entfernbare Basisteil (6) lösbar an der Bereitschaftshalterung (1) befestigt, insbesondere in den Hohlraum (13) der Basis (14) eingeclipst ist.

8. Katzenstreuschaufel (2) mit Bereitschaftshalterung (1) nach einem der Ansprüche 6 oder 7,
**dadurch gekennzeichnet,**
**dass** das entfernbare Basisteil (6) mit Rastarmen (15) und/oder Rastnasen versehen ist, welche zum lösbaren Befestigen des entfernbaren Basisteils (6) an Innenwänden des Hohlraums (13) in der Basis (14) dienen, insbesondere über ein Einrasten in Rastvertiefungen oder Rastausnehmungen (8).

9. Katzenstreuschaufel (2) mit Bereitschaftshalterung (1) nach mindestens einem der Ansprüche 6 bis 8,
**dadurch gekennzeichnet,**
**dass** das entfernbare Basisteil (6) einen Fuß der Bereitschaftshalterung (1) bildet.

10. Katzenstreuschaufel (2) mit Bereitschaftshalterung (1) nach mindestens einem der Ansprüche1 bis 9,
**dadurch gekennzeichnet,**
**dass** der Beutelspender eine Halterung für eine Beutelrolle (17), insbesondere Haltebügel (7) oder eine Haltelasche, sowie eine Entnahmeöffnung (9) aufweist, wobei die Halterung für die Beutelrolle (17) in die Basis (14) der Bereitschaftshalterung (1) integriert ist.

11. Katzenstreuschaufel (2) mit Bereitschaftshalterung (1) nach Anspruch 10,
**dadurch gekennzeichnet,**
**dass** die Entnahmeöffnung (9) des Beutelspenders eine Beutelführungskante oder Abrisskante (16) ausbildet.

12. Katzenstreuschaufel (2) mit Bereitschaftshalterung (1) nach einem der Ansprüche 10 oder 11 und nach mindestens einem der Ansprüche 6 bis 9,
**dadurch gekennzeichnet,**
**dass** das entfernbare Basisteil (6) die Halterung für die Beutelrolle (17) trägt.

13. Katzenstreuschaufel (2) mit Bereitschaftshalterung (1) nach den Ansprüchen 9 und 12,
**dadurch gekennzeichnet,**
**dass** das entfernbare Basisteil (6) Haltebügel (7) für die Beutelrolle (17) trägt.

14. Katzenstreuschaufel (2) mit Bereitschaftshalterung (1) nach mindestens einem der Ansprüche 6 bis 13,
**dadurch gekennzeichnet,**
**dass** die Entnahmeöffnung (9) des Beutelspenders in einem Grenzbereich zwischen dem entfernbaren Basisteil (6) und dem verbleibenden Teil der Basis (14) der Bereitschaftshalterung (1) angeordnet ist.

15. Katzenstreuschaufel (2) mit Bereitschaftshalterung (1) nach mindestens einem der vorangegangenen Ansprüche,
**dadurch gekennzeichnet,**
**dass** sich der Köcher (12) nach oben öffnet.
